# EUROPEAN PATENT SPECIFICATION

(11) **EP 1 322 131 B1**
(45) Date of publication and mention of the grant of the patent: **08.03.2006**
(21) Application number: 01610128.9
(22) Date of filing: 19.12.2001
(51) Int. Cl.: H04Q 7/38, H04M 3/56

(54) **Including a further telecommunications device in an existing call**
Hinzufügen einer Telekommunikationsvorrichtung in einer bestehenden Verbindung
Ajout d'un appareil de télécommunications dans une communication existante

(43) Date of publication of application: 25.06.2003
(73) Proprietor: TELEFONAKTIEBOLAGET LM ERICSSON (publ), 164 83 Stockholm (SE)
(72) Inventor: Olsson, Magnus, 29153 Kristianstad (SE)
(74) Representative: Boesen, Johnny Peder

(56) References cited:
- EP-A- 1 161 114
- WO-A-01/43459
- DE-A- 10 012 057
- "TS 100 517;Digital cellular telecommunications system (Phase 2+); MultiParty (MPTY) Supplementary Services - Stage 1 (GSM 02.84 version 7.0.0 Release 1998)" ETSI TS 100 517 V7.0.0, XX, XX, August 1999 (1999-08), pages 1-13, XP002169612

## Description

### Technical Field of the Invention

The invention relates to a method of including a further telecommunications device in an existing call between a number of telecommunications devices already connected to each other through a telecommunications network, said telecommunications network allowing calls in which more than two telecommunications devices are connected to each other. The invention also relates to telecommunications devices to be used in the method.

### Description of Related Art

Although the most common type of communication by means of telecommunications devices, such as standard telephones or mobile telephones, is a call between two parties connected to each other through a telecommunications network, most networks also allow so-called conference calls, i.e. calls in which more than two parties communicate with each other through the network. As an example, the Technical Specification ETSI TS 100 517 V7.0.0 describes the MultiParty (MPTY) Supplementary Services related to the GSM (Global System for Mobile Communication) system.

A conference call is typically established by one of the parties who first establishes a normal two-party call to one of the other parties by entering the telephone number of this party, either manually or from a phone book memory in the device. When this call is established the calling part has to place this call on hold and then establish a second call to a third party. When also this connection has been established, the calling part has to instruct the network to join the two calls by e.g. pressing a conference call key or selecting this activity from a menu. If further parties have to be included in the conference call, this process has to be repeated by placing the conference call on hold and then establishing a new call to the next party and then again joining the two calls. This process has to be repeated until all parties are connected in the conference call. Although the details of this process may vary from one type of network to another, the complexity of the process is common to the known networks. In practical use this process will often be less expedient, because at least some of the participants have to wait a considerable time before the complete conference is actually established, and for the calling part it is a burdensome task to establish all the individual calls and then join them together one by one. The complexity of the process also increases the risk of mistakes, so that e.g. a wrong number is dialled or a connection is interrupted.

EP 954 156 suggests a solution that simplifies this process. According to this document data relating to the remote parties of a conference call are stored in the telephone of the calling part before the setting up of the conference call is initiated. These data may be e.g. the telephone numbers of the remote parties. The telephone further has control means for retrieving these data and originating the necessary calls automatically. This means that the conference call can be set up with less intervention from the calling party, and the waiting time is also reduced.

However, the advantages of this document can only be utilized when all participants in a conference call are known to the calling party before the call is established. Very often a need to include a further party in a call arises during the call. As an example, a question may arise in a discussion which can be better answered by inviting a further party, e.g. an expert, into the call. In this case one of the parties still has to place the other party - or the other parties if it was already a conference call - on hold and then establish a new call to the party to be invited before the calls can be joined together. This is not a convenient solution, especially not for calls involving fast decisions and dynamic participants. In the case where the existing call was already a conference call, one of the parties has to leave the discussion while these steps are performed, and in the meantime the remaining participants may already have closed the meeting without the desired involvement of the new expert. Further the complexity of the mentioned steps typically requires a skilled user, which severely limits the use of this facility. Actually, less skilled users may not be able to, or may not dare to, perform such steps during an ongoing conference call. As a result, one of the parties of the original call may instead simply - in the case of mobile telephones - walk over to the party to be invited and hand over the phone to him or her. However, that excludes the person handing over the telephone from the discussion, so that is not much better.

For conventional wireline telecommunications networks a number of telephone terminals in e.g. a private home are often connected in parallel to a single telephone line. This allows one member of a family to join in on a telephone conversation, in which another member of the family is involved, by simply picking up a handset from another available telephone terminal. WO98/05177 suggests a similar solution for mobile telephones. Mobile telephones belonging to members of the same household can be designated and correlated to each other in such a way that whenever more than one member is within a designated home zone, and one is involved in a call connection, any other member within the home zone can join in on the conversation by simply picking up a mobile station and dialling a service code. However, in this situation the new member is the active one in the process of getting into the existing call, and, as mentioned, the method can only be used when the mobile terminals have been designated to each other beforehand, and when they are both within the home zone. In a practical business situation these conditions will only rarely be fulfilled, because it cannot be anticipated which expert it will be desired to involve in a call not yet established.

An alternative to the network conference is suggested in EP 1 161 114. Instead of connecting several devices via the telecommunications network, there is only one "external" connection, while the other devices are connected via a local Low Power Radio Frequency network, such as Bluetooth, through one of the "external" devices. The use of this solution use is limited to situations where a group of the participants is located within the range of the short-range link and remain located within this range. In a typical use case this condition will often not be fulfilled. When the new participant has been included in the conference, the user inviting him will normally prefer to return to his own office, which will typically be out of the range of the short-range link, or he may even prefer to leave the conference. In both cases the new participant will also be dropped from the conference, which is not acceptable.

In WO 01/43459 a mobile phone can - e.g. in case of a low battery - transfer a call to a wire telephone, if they are both provided with a short-range wireless transceiver. The mobile phone requests the phone number of the wired telephone via the short-range link, and then it requests via its cellular network the call to be transferred to the wired telephone. Thus this document refers to transfer of a call in contrast to establishing a conference call.

Therefore, it is an object of the invention to provide a method of the above-mentioned type which allows a further telecommunications device, and thus a further participant of the call, to be included in the call without requiring one of the other participants to get out of the call to perform a complex process of including the new participant. The method should not be restricted to a limited group of terminals designated to each other or a specific zone beforehand.

### Summary

According to the invention the object is achieved in that the method comprises the steps of transmitting via a short-range communications link from a first one of said already connected telecommunications devices a signal requesting an additional telecommunications device to be included in the existing call; receiving said requesting signal in a telecommunications device which is not included in said call; transmitting an acknowledgement signal from said not included telecommunications device to said first telecommunications device in response to said requesting signal, said acknowledgement signal comprising identification data allowing a call to said further telecommunications device to be established; and connecting a further telecommunications device to said already connected telecommunications devices via said telecommunications network by use of said identification data.

By utilizing the short-range communications link to exchange the information needed to include the further telecommunications device in the call and then establishing the connection to the further telecommunications device automatically, the participants are released from the complex process. Further, any device within the range of the short-range communications link can be included in the call.

The further telecommunications device being connected to the already connected telecommunications devices may be identical to the not included telecommunications device, i.e. the new device included in the call is the one responding to the request, which will typically be the case. In this situation the step of connecting the further telecommunications device may be performed under control of said first telecommunications device as the most common situation, but it is also possible to perform the step of connecting the further telecommunications device under control of the further telecommunications device itself.

Alternatively, the further telecommunications device being connected to the already connected telecommunications devices may be different from the not included telecommunications device, thus allowing a user to redirect the call to another nearby device, such as a standard office telephone, which may be more convenient to use.

Expediently, the identification data may comprise a telephone number of the further telecommunications device, which makes the method suitable for use in telephone networks.

The method may further comprise the steps of receiving said requesting signal in a plurality of telecommunications devices not included in said call; transmitting from each of said plurality of not included telecommunications devices an acknowledgement signal comprising identification data allowing a call to a further telecommunications device specified by the respective one of said plurality of not included telecommunications devices to be established; receiving the plurality of acknowledgement signals in said first telecommunications device; presenting a list of identification data corresponding to each of said plurality of not included telecommunications devices on a data output user interface of said first telecommunications device; selecting one of said plurality of not included telecommunications devices from said list; and connecting the further telecommunications device specified by the selected not included telecommunications device to said already connected telecommunications devices via said telecommunications network by use of the identification data corresponding to the selected not included telecommunications device. In this way it is ensured that the correct device is included in the call in the case where several devices are within the range of the short-range communications link.

Alternatively, this can be ensured when the method further comprises the steps of receiving said requesting signal in a plurality of telecommunications devices not included in said call; presenting an indication of the received requesting signal on a data output user interface in each of said plurality of not included telecommunications devices; receiving a user response to said indication through a data input user interface in a selected one of said plurality of not included telecommunications devices; and transmitting an acknowledgement signal from said selected not included telecommunications device to said first telecommunications device in response to said user response.

In an expedient embodiment of the invention the short-range communications link is a Bluetooth link. This is convenient because more and more communications devices will have a Bluetooth transmitter/receiver integrated. Further the Bluetooth transmitter/receiver has a range of approximately 10 metres, which is expedient in many situations. It is close enough to limit the number of the devices within the range and still allows the users to perform the process with some distance between the two devices.

Alternatively, the short-range communications link may be an infrared communications link. Many communications devices also have an infrared port integrated in the device. The range of the IR link is considerably shorter than that of the Bluetooth link, and typically the two ports must face each other in order to ensure a good connection, but this normally ensures that one device, i.e. the desired one, will be able to receive the requesting signal.

As mentioned, the invention also relates to a telecommunications device arranged to be connected to other telecommunications devices through a telecommunications network and further having means for exchanging signals via a short-range communications link, and having a data input user interface allowing a user to supply input data to the device. The device is further arranged to receive through said data input user interface a user input requesting a further telecommunications device to be included in an already existing call; transmit via said short-range communications link a request for the further device to be included into the existing call; receive an acknowledgement signal comprising identification data allowing a call to said further telecommunications device to be established; provide a connection to the further device via said telecommunications network by use of said received identification data; and join the provided connection and the existing call to a common call.

By utilizing the short-range communications link to exchange the information needed to include the further telecommunications device in the call and then establishing the connection to the further telecommunications device automatically, the participants are released from the complex process. Further, any device within the range of the short-range communications link can be included in the call.

Expediently, the identification data may comprise a telephone number of the further telecommunications device, which makes the device suitable for use in telephone networks.

The device may further be arranged to receive an acknowledgement signal from a plurality of further telecommunications devices; present a list of identification data corresponding to each of said plurality of further telecommunications devices on a data output user interface; select from said list one of said plurality of further telecommunications devices; and provide a connection to the selected further telecommunications device by use of the identification data corresponding to the selected further telecommunications device. In this way it is ensured that the correct device is included in the call in the case where several devices are within the range of the short-range communications link.

Expediently, the telecommunications device may be a mobile telephone. The invention is convenient especially with mobile telephones because a user can walk about and approach the person who is desired as a participant in the call.

In an expedient embodiment of the invention the short-range communications link is a Bluetooth link. This is convenient because more and more communications devices will have a Bluetooth transmitter/receiver integrated. Further the Bluetooth transmitter/receiver has a range of approximately 10 metres, which is expedient in many situations. It is close enough to limit the number of the devices within the range and still allows the users to perform the process with some distance between the two devices.

Alternatively, the short-range communications link may be an infrared communications link. Many communications devices also have an infrared port integrated in the device. The range of the IR link is considerably shorter than that of the Bluetooth link, and typically the two ports must face each other in order to ensure a good connection, but this normally ensures that one device, i.e. the desired one, will be able to receive the requesting signal.

As mentioned, the invention also relates to a telecommunications device arranged to be connected to other telecommunications devices through a telecommunications network and further having means for exchanging signals via a short range communications link. The device is further arranged to receive via said short range communications link a signal requesting the device to be included in a call already existing between a number of other telecommunications devices; and transmit in response to said requesting signal an acknowledgement signal comprising identification data allowing a call to the device to be established.

By utilizing the short-range communications link to exchange the information needed to include the further telecommunications device in the call, the connection to the further telecommunications device can be established automatically, and the participants are released from the complex process. Further, any device within the range of the short-range communications link can be included in the call.

Expediently, the identification data may comprise a telephone number of the further telecommunications device, which makes the device suitable for use in telephone networks.

The device may further be arranged to present an indication of the received requesting signal on a data output user interface; receive a user response to said indication through a data input user interface; and transmit the acknowledgement signal in response to said user response. In this way it is ensured that the correct device is included in the call in the case where several devices are within the range of the short-range communications link.

Expediently, the telecommunications device may be a mobile telephone. The invention is convenient especially with mobile telephones because a user can walk about and approach the person who is desired as a participant in the call.

In an expedient embodiment of the invention the short-range communications link is a Bluetooth link. This is convenient because more and more communications devices will have a Bluetooth transmitter/receiver integrated. Further the Bluetooth transmitter/receiver has a range of approximately 10 metres, which is expedient in many situations. It is close enough to limit the number of the devices within the range and still allows the users to perform the process with some distance between the two devices.

Alternatively, the short-range communications link may be an infrared communications link. Many communications devices also have an infrared port integrated in the device. The range of the IR link is considerably shorter than that of the Bluetooth link, and typically the two ports must face each other in order to ensure a good connection, but this normally ensures that one device, i.e. the desired one, will be able to receive the requesting signal.

### Brief Description of the Drawings

The invention will now be described more fully below with reference to the drawings, in which
figure 1 shows a number of mobile telephones connected in a conference call,
figure 2 shows how one of the mobile telephones in figure 1 communicates with a further mobile telephone via a Bluetooth link,
figure 3 shows that the further telephone in figure 2 is included in the existing call,
figure 4 shows how a mobile telephone from which a further participant in the call is requested may be implemented,
figure 5 shows an implementation of a mobile telephone to be included in an existing call,
figure 6 shows a flow chart illustrating the function of the invention,
figure 7 shows how one of the mobile telephones in figure 1 communicates with a number of further mobile telephones via a Bluetooth link,
figure 8 shows the use of an infrared link instead of the Bluetooth link,
figure 9 shows the use of standard telephones instead of mobile telephones, and
figure 10 shows how a call can be redirected to another telephone.

### Detailed Description of Embodiments

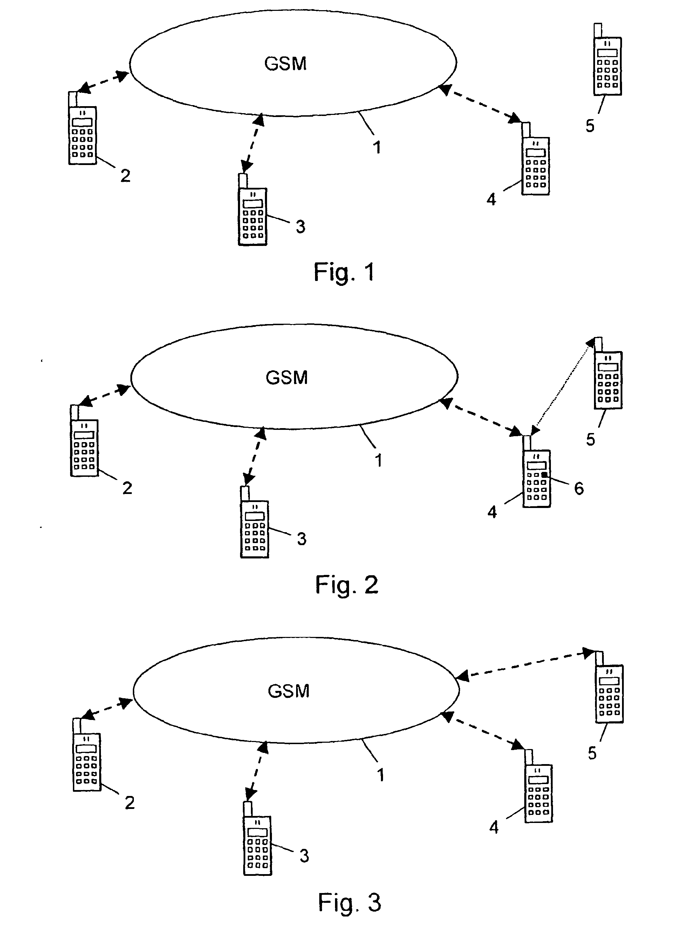

Figures 1 to 3 show an example of the use of the invention. In the example a number of GSM mobile telephones are connected to a GSM network 1. In figure 1 the mobile phones 2, 3 and 4 are shown as being involved in a conference call, which may have been established in the well-known manner as described in e.g. the Technical Specification ETSI TS 100 517 V7.0.0 relating to MultiParty (MPTY) Supplementary Services for the GSM (Global System for Mobile Communication) system. The existing call may also be a normal two-party call e.g. between the mobile telephones 2 and 4.

According to the prior art the conference call between the mobile phones 2, 3 and 4 is typically established by the user of one of the mobile telephones, e.g. the telephone 4, who first establishes a normal two-party call to e.g. the mobile phone 2 by entering the telephone number of this telephone, either manually or from a phone book memory in the telephone. Then the user of the telephone 4 places this call on hold and establishes another call to the telephone 3. Having then established two calls, one active and one on hold, the user of the telephone 4 requests the network 1 to begin the conference call by joining the two calls so that the three mobile telephones 2, 3 and 4 can all communicate with each other.

Once the conference call is active, the mobile telephone 4, or for some systems any one of the participating parties, may add, disconnect or separate remote parties. When a further mobile telephone is added to the conference call, the user of the telephone 4 has to place the conference call, i.e. the other parties, on hold while a new two-party call is established to the telephone to be added. When established, this call and the conference call on hold can then be joined, and the conference call may continue, now including the new party. During this procedure the user of the mobile telephone 4 is out of the conference, while the remaining remote parties may still be able to communicate with each other, at least in some systems.

The desire to include a further party in the conference call often arises during the call. As an example a question may arise in a discussion which can be better answered by inviting a further party, e.g. an expert, into the call. Typically this expert will be located in the same building, or even the same office, as e.g. the user of the telephone 4. In figure 1 the further party is illustrated as the mobile telephone 5, which can be added to the existing conference call between the mobile telephones 2, 3 and 4.

Figure 2 shows an example of how this process may be improved according to the invention. At least the mobile telephones 4 and 5 are provided with transmitters and receivers for a short-range communications link, such as a Bluetooth link. When the further party is desired in the conference, the user of the telephone 4 will typically walk about in the building and approach the further party. When a silent approval is received from the further party, the user of the telephone 4 can simply initiate a procedure of including the telephone 5 in the conference call by activating a key 6 on the keypad of the telephone 4. Alternatively, a corresponding function may be selected from a menu. This initiates a Bluetooth discovery function in which the Bluetooth transmitter/receiver of the telephone 4 establishes a contact to the corresponding Bluetooth transmitter/receiver of the telephone 5.

The telephone 5 can then accept being included in the conference call by transmitting an acknowledgement signal back to the telephone 4 via the Bluetooth link. This acknowledgement signal will typically include the telephone number of the telephone 5. Having received this telephone number, the telephone 4 can now automatically establish a normal call to the telephone 5 and then instruct the network 1 to include this call into the conference call. Having initiated this procedure by e.g. activating the key 6, the user of the telephone 4 is not required to perform any further steps, since the rest of the procedure is performed automatically. During the first part of the procedure, i.e. the Bluetooth part, the user of the mobile telephone 4 can still remain connected to the other parties of the existing conference call and thus still participate in the discussion. Depending on the type of the network 1, he may have to leave the conference during the final part of the procedure where the call to the telephone 5 is established, but that will at least be a considerably shorter time because the call is established automatically. Some types of networks may even allow the user to remain in the conference during this part of the procedure. In figure 3 the mobile telephone 5 is connected to the conference call, and all four telephones 2, 3, 4 and 5 can now communicate with each other.

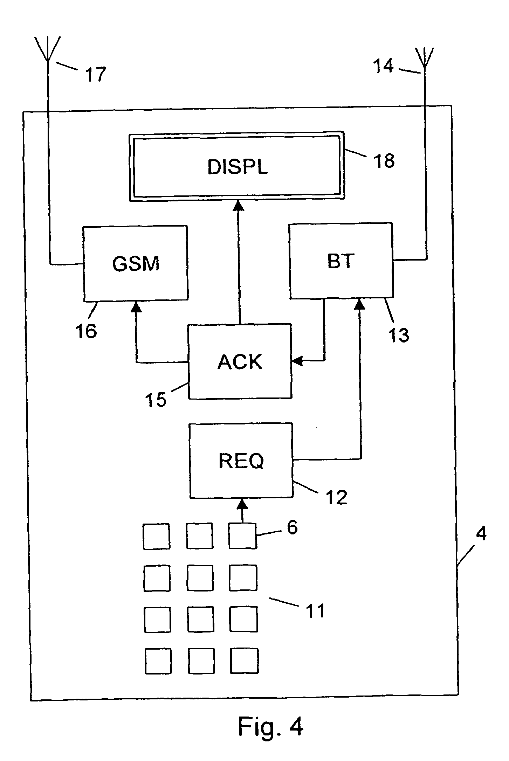

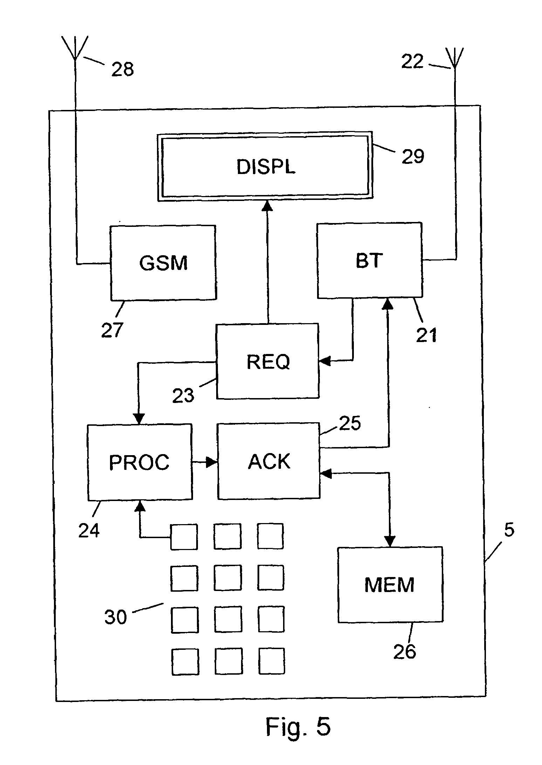

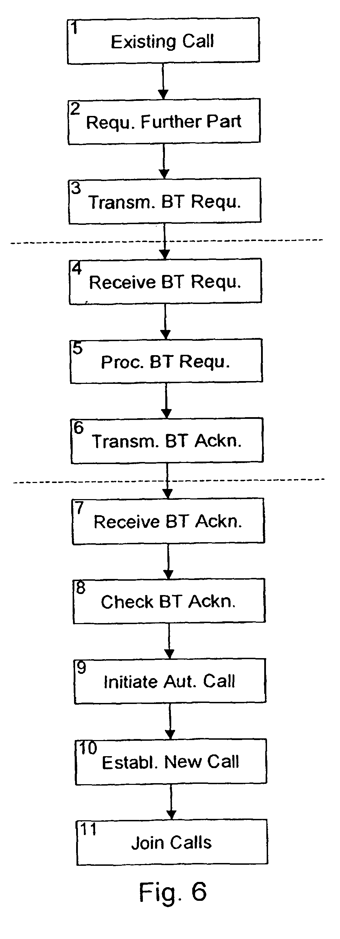

Figure 4 shows an example of how the mobile telephone 4, from which a further participant in the call is requested, may be implemented. Similarly, Figure 5 shows an implementation of the mobile telephone 5, i.e. the telephone to be added. As mentioned, the mobile telephones 4 and 5 contain circuitry for the inventive function as well as the circuitry of a normal mobile telephone. For reasons of clarity only the parts of the normal telephone circuitry needed together with the inventive function are illustrated. Although the functions of the mobile telephone 4 and the mobile telephone 5 are shown separately, in practice it will often be most convenient to include both functions in the same device so that this device can perform both functions. Figure 6 is a flow chart illustrating the function of the system of figures 1 to 3, and the function will now be described with reference to figures 4, 5 and 6.

Step 1 illustrates that an existing call is already going on. As mentioned before, this call can be either a normal two-part call or a conference call with more than two participants. In step 2 it is decided to invite a further participant into the call, and the user of the mobile telephone 4 initiates the process of including the further party in the call by activating the key 6 on the keypad 11 of the telephone 4. The requesting unit 12 sends a requesting signal to the Bluetooth transmitter/receiver 13, from which the request is transmitted through the antenna 14. This transmission is illustrated in step 3.

In step 4 the request transmitted from the telephone 4 is received in the telephone 5 by the Bluetooth transmitter/receiver 21 through the antenna 22. The received request is recorded in the request unit 23 and processed in the processing unit 24, as will be described in more detail later. The processing of the request is illustrated in step 5. If the request is accepted - either under instruction of the user of the telephone 5 or because the processing unit 24 is programmed to accept such requests automatically - the processing unit 24 instructs the acknowledgement unit 25 to transmit an acknowledgement signal as shown in step 6. This acknowledgement signal comprises the telephone number of the mobile telephone 5, which will enable the remote mobile telephone 4 to establish a GSM call to this telephone. The telephone number is retrieved from a memory 26, which could typically be a memory on a SIM (Subscriber Identity Module) card inserted in the mobile telephone 5. The acknowledgement signal is transmitted by the Bluetooth transmitter/receiver 21 and the antenna 22.

In the mobile telephone 4 this acknowledgement signal is now received by the Bluetooth transmitter/receiver 13, as illustrated in step 7, and communicated to the acknowledgement unit 15, in which the validity of the signal is checked according to step 8. Having knowledge of the telephone number of the mobile telephone 5, the acknowledgement unit 15 can then automatically initiate (step 9) a GSM call to that telephone through the normal GSM circuitry 16 and the antenna 17.

The call is established through the GSM network 1, and in the mobile telephone 5 the call is received by the normal GSM circuitry 27 and the antenna 28. This is illustrated in step 10. Finally, in step 11 the acknowledgement unit 15 in the telephone 4 automatically instructs the network 1 to join the two calls, i.e. the newly established call to the telephone 5 and the call that was already existing.

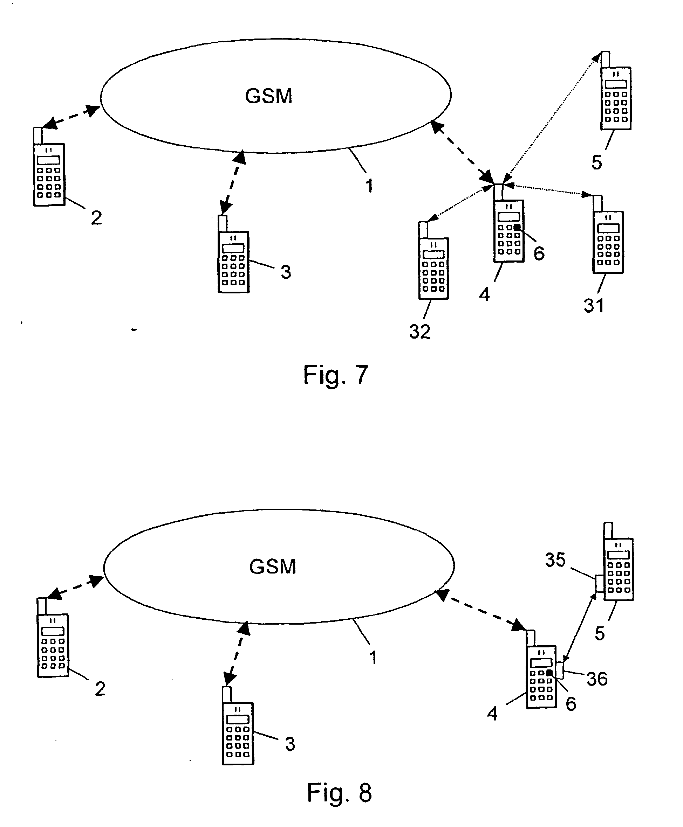

Above, the requesting signal from the mobile telephone 4 was received and processed by the mobile telephone 5. In a practical situation, however, there may well be several Bluetooth receivers within the transmitting range of the Bluetooth transmitter/receiver 13 in the telephone 4, and some of these may be mobile telephones similar to the telephone 5. This situation is shown in figure 7. Here the requesting signal is received by the mobile telephones 31 and 32 in addition to the mobile telephone 5 intended to be included in the call. Several possibilities of ensuring that only the correct mobile telephone is included exist. Two of these possibilities will be described below.

One possibility is that all three telephones answer the requesting signal as described above in steps 4 to 6. The Bluetooth transmitter/receiver 13 and the acknowledgement unit 15 in the telephone 4 will then receive three different acknowledgement signals each comprising the telephone number of a respective mobile telephone. These telephone numbers - and/or corresponding names if they already exist in the phone book memory of the telephone - are then shown in a list on the display 18, and the user can select the correct number by means of the keypad 11.

Having selected one of the numbers, the acknowledgement unit 15 can initiate and establish a call to the phone with the selected number as described above.

Another possibility is to make the decision in the telephones receiving the requesting signal. In each of the mobile telephones 5, 31 and 32 the processing unit 24 will then show the request on the display 29. The user of the telephone 5, who expects the request e.g. due to eye contact with the user of the phone 4, will then accept the request by means of the keypad 30, while the request on the telephones 31 and 32 will be either unanswered or rejected by their users. Having received the acceptance of the user, the processing unit of the telephone 5 will now instruct the acknowledgement unit 25 to transmit the acknowledgement signal as described above. It may be mentioned that since the Bluetooth link is capable of transmitting voice signals, it would also be possible to transmit the discussion of the existing call via the Bluetooth link to the telephone 5 for a short time, thus allowing the user of the telephone 5 to listen to the discussion a short time before he decides whether he will accept being included in the call.

As will be mentioned in more detail below, other types of short-range communications links may be used instead of the Bluetooth link. With some of these links the requesting signal can only be received by one other device, and thus the above-mentioned selection procedures will not be needed.

One of the alternatives to the Bluetooth link is an infrared (IR) link, since today many mobile telephones are equipped with an infrared port. This situation is illustrated in figure 8 which corresponds to figure 2, except for the fact that the telephones 4 and 5 are here shown with infrared ports 35 and 36, respectively. Instead of the Bluetooth transmitter/receivers 13 and 21 corresponding infrared transmitter/receivers are used. While the range of the Bluetooth link is approximately 10 metres, the range of the infrared link is limited to approximately 25 centimetres and the two ports must be facing each other. As mentioned, this has the advantage that only one device will probably respond to the requesting signal.

Further alternatives to the Bluetooth link could be an acoustic signal, a direct physical contact, a Wireless LAN, or a digital camera in the mobile telephone 4 could take a picture of the display of the phone 5 on which its telephone number is shown.

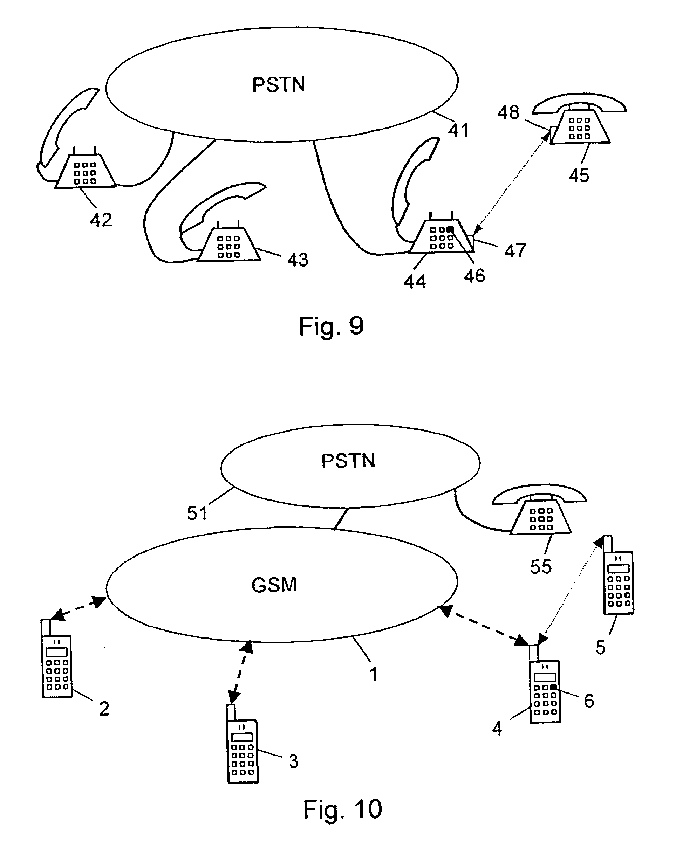

Although the mobile telephones are shown as GSM phones in the above examples, it should be noted that other types of mobile telephones, such as GPRS, W-CDMA or UMTS, can be used as well. Also portable telephones, such as DECT telephones, can be used. Further, the invention is not limited to mobile telephones; it can also be used with other telecommunications devices. As an example, figure 9 shows a Public Switched Telephone Network (PSTN) 41. The figure corresponds to figure 2, but as shown standard telephones 42, 43 and 44 are here connected in a conference call instead of the mobile telephones 2, 3 and 4 in figure 2. The telephone 44 is equipped with a Bluetooth transmitter/receiver 47, and when a further telephone 45 within the range of the Bluetooth transmitter/receiver 47 is to be included in the call, the user of the telephone 44 activates the key 46, and a requesting signal is transmitted to the Bluetooth transmitter/receiver 48 of the telephone 45. Having received an acknowledgement signal from the telephone 45 via the Bluetooth link, the telephone 44 automatically establishes a new call to the telephone 45, and the two calls are joined together similar to the situation described above. Standard telephones and mobile telephones may also be combined with each other, so that e.g. a mobile telephone may be included in a call between standard telephones, or vice versa.

It may be noted that after the inclusion of the further telephone the requesting telephone, e.g. the mobile telephone 4 in figure 2 or the telephone 44 in figure 9, may be disconnected from the conference call, so that the call is actually handed over, e.g. from the mobile telephone 4 to the mobile telephone 5.

In the examples mentioned above, the actual call to the new telephone 5 or 45 is established by the telephone 4 or 44 after the reception of the acknowledgement signal from the new telephone. However, in some cases it may be more convenient that the invited person, i.e. the user of e.g. the phone 5, establishes the connection to the existing call by calling up the group himself. This also has the advantage that this task is removed from the requesting party. However, in this case the relevant call information has to be provided from the requesting phone together with the invitation or in a subsequent communication via the short-range communications link. This information can be a telephone number and possibly also a passcode.

In the situation shown in figures 1 to 3 and described above the telephone 5 accepts being included in the conference call by transmitting an acknowledgement signal back to the telephone 4 via the Bluetooth link. This acknowledgement signal typically includes the telephone number of the telephone 5, so that a call to this telephone can be established. However, it will often be more convenient for the user of the mobile telephone 5 to join the conference call from another telephone, e.g. a nearby standard office telephone. In this case the user enters the telephone number of the telephone to which he wants to redirect the call, and then this number is included in the acknowledgement signal instead of the number of the telephone 5. This situation is illustrated in figure 10. Like before, the request is sent from the telephone 4 to the telephone 5 via the Bluetooth link, and the acknowledgement signal is returned from the telephone 5 to the telephone 4, again via the Bluetooth link. However, the acknowledgement signal now includes the number of the telephone 55 which is preferred by the user of the mobile telephone 5. A call is then established by the telephone 4 to the telephone 55 via the GSM network 1 and the PSTN network 51. Finally this call is included in the conference call as described before, so that the conference call now includes the telephones 2, 3, 4 and 55. The telephone 5, on the other hand, is not connected to the conference call.

Although a preferred embodiment of the present invention has been described and shown, the invention is not restricted to it, but may also be embodied in other ways within the scope of the subject-matter defined in the following claims.

## Claims

1. A method of including a further telecommunications device (5; 45) in an existing call between a number of telecommunications devices (2, 3, 4; 42, 43, 44) already connected to each other through a telecommunications network (1; 41), said telecommunications network allowing calls in which more than two telecommunications devices are connected to each other, the method comprising the steps of:
• transmitting via a short-range communications link from a first one (4; 44) of said already connected telecommunications devices a signal requesting said further telecommunications device (5; 45) to be included in the existing call,
• receiving via said short-range communications link said requesting signal in a telecommunications device (5, 31, 32; 45) which is not included in said call,
• transmitting via said short-range communications link an acknowledgement signal from said not included telecommunications device (5, 31, 32; 45) to said first telecommunications device (4; 44) in response to said requesting signal, and
• connecting said further telecommunications device (5; 45) to said already connected telecommunications devices,
**characterized in that** said acknowledgement signal comprises identification data allowing a call to said further telecommunications device to be established via said telecommunications network (1; 41), and that said further telecommunications device (5; 45) is connected to said already connected telecommunications devices via said telecommunications network (1; 41) by use of said identification data.

2. A method according to claim 1, **characterized in that** said further telecommunications device being connected to said already connected telecommunications devices is identical to said not included telecommunications device.

3. A method according to claim 1 or 2, **characterized in that** the step of connecting said further telecommunications device is performed under control of said first telecommunications device.

4. A method according to claim 1 or 2, **characterized in that** the step of connecting said further telecommunications device is performed under control of said further telecommunications device.

5. A method according to claim 1, **characterized in that** said further telecommunications device being connected to said already connected telecommunications devices is different from said not included telecommunications device.

6. A method according to any one of claims 1 to 5, **characterized in that** said identification data comprises a telephone number of said further telecommunications device (5, 31, 32; 45).

7. A method according to any one of claims 1 to 6, **characterized in that** the method further comprises the steps of:
• receiving said requesting signal in a plurality of telecommunications devices (5, 31, 32) not included in said call,
• transmitting from each of said plurality of not included telecommunications devices an acknowledgement signal comprising identification data allowing a call to a further telecommunications device specified by the respective one of said plurality of not included telecommunications devices to be established,
• receiving the plurality of acknowledgement signals in said first telecommunications device (4),
• presenting a list of identification data corresponding to each of said plurality of not included telecommunications devices on a data output user interface (18) of said first telecommunications device (4) ,
• selecting from said list one (5) of said plurality of not included telecommunications devices, and
• connecting the further telecommunications device specified by the selected not included telecommunications device (5) to said already connected telecommunications devices via said telecommunications network (1) by use of the identification data corresponding to the selected not included telecommunications device.

8. A method according to any one of claims 1 to 6, **characterized in that** the method further comprises the steps of:
• receiving said requesting signal in a plurality of telecommunications devices (5, 31, 32) not included in said call,
• presenting an indication of the received requesting signal on a data output user interface (29) in each of said plurality of not included telecommunications devices,
• receiving a user response to said indication through a data input user interface (30) in a selected one (5) of said plurality of not included telecommunications devices, and
• transmitting an acknowledgement signal from said selected not included telecommunications device (5) to said first telecommunications device (4) in response to said user response.

9. A method according to any one of claims 1 to 8, **characterized in that** said short-range communications link is a Bluetooth link.

10. A method according to any one of claims 1 to 8, **characterized in that** said short-range communications link is an infrared communications link.

11. A telecommunications device (4; 44) arranged to be connected to other telecommunications devices through a telecommunications network (1; 41) and further having means (13, 14; 36; 47) for exchanging signals via a short-range communications link, and having a data input user interface (11) allowing a user to supply input data to the device, the device further being arranged to:
• receive through said data input user interface (11) a user input requesting a further telecommunications device (5; 45) to be included into an already existing call between the device and at least one of said other telecommunications devices,
• transmit via said short-range communications link to another one of said other telecommunications devices which is not included in said call a request for the further device to be included in the existing call,
• receive via said short-range communications link from said not included telecommunications device an acknowledgement signal comprising an acknowledgement signal comprising identification data allowing a call to said further telecommunications device to be established, and
• provide a connection to the further device,
**characterized in that** the device is further arranged to:
• provide the connection to the further device via said telecommunications network (1; 41) by use of said received identification data, and
• join the provided connection and the existing call to a common call.

12. A telecommunications device according to claim 11, **characterized in that** said identification data comprises a telephone number of said further telecommunications device (5, 31, 32; 45).

13. A telecommunications device according to claim 11 or 12, **characterized in that** the device is further arranged to:
• receive an acknowledgement signal from a plurality of further telecommunications devices (5, 31, 32),
• present a list of identification data corresponding to each of said plurality of further telecommunications devices on a data output user interface (18),
• select from said list one (5) of said plurality of further telecommunications devices, and
• provide a connection to the selected further telecommunications device (5) by use of the identification data corresponding to the selected further telecommunications device.

14. A telecommunications device according to any one of claims 11 to 13, **characterized in that** the device is a mobile telephone (4).

15. A telecommunications device according to any one of claims 11 to 14, **characterized in that** said short-range communications link is a Bluetooth link.

16. A telecommunications device according to any one of claims 11 to 14, **characterized in that** said short-range communications link is an infrared communications link.

17. A telecommunications device (5; 31; 32) arranged to be connected to other telecommunications devices through a telecommunications network and further having means (21, 22) for exchanging signals via a short-range communications link, the device further being arranged to:
• receive via said short-range communications link a signal from a first one of said other telecomunications devices requesting the device to be included in a call already existing between a number of said other telecommunications devices (2, 3, 4; 41, 42, 43), and
• transmit to said first other telecommunications device via said short-range communications link an acknowledgement signal comprising identification data allowing a call to the device to be established in response to said requesting signal,
**characterized in that** the device is further arranged to provide said identification data such that the call to the device is allowed to be established via said telecommunications network, and is further arranged to connect to said other telecommunications devices as a result of said call.

18. A telecommunications device according to claim 17, **characterized in that** said identification data comprises a telephone number of the device.

19. A telecommunications device according to claim 17 or 18, **characterized in that** the device is further arranged to:
• present an indication of the received requesting signal on a data output user interface (29),
• receive a user response to said indication through a data input user interface (30), and
• transmit the acknowledgement signal in response to said user response.

20. A telecommunications device according to any one of claims 17 to 19, **characterized in that** the device is a mobile telephone (5).

21. A telecommunications device according to any one of claims 17 to 20, **characterized in that** said short-range communications link is a Bluetooth link.

22. A telecommunications device according to any one of claims 17 to 20, **characterized in that** said short-range communications link is an infrared communications link.

## Patentansprüche

1. Verfahren zum Einbinden einer weiteren Telekommunikationsvorrichtung (5; 45) in einem bestehenden Ruf zwischen einer Anzahl an Telekommunikationsvorrichtungen (2, 3, 4; 42, 43, 44), welche bereits über ein Telekommunikationsnetzwerk (1; 41) miteinander verbunden sind, wobei das Telekommunikationsnetzwerk Rufe ermöglicht, bei welchen mehr als zwei Telekommunikationsvorrichtungen miteinander verbunden werden, wobei das Verfahren die Schritte enthält:
Übertragen eines Signals über eine Kurzstrecken-Kommunikationsverbindung von einer ersten (4; 44) der bereits verbundenen Telekommunikationsvorrichtungen, welches anfordert, dass die weitere Telekommunikationsvorrichtung (5; 45) im bestehenden Ruf eingebunden wird;
Empfangen des Anforderungssignals über die Kurzstrecken-Kommunikationsverbindung in einer Telekommunikationsvorrichtung (5, 31, 32; 45), welche nicht im Ruf eingebunden ist,
Übertragen eines Bestätigungssignals über die Kurzstrecken-Kommunikationsverbindung von der nicht eingebundenen Telekommunikationsvorrichtung (5, 31, 32; 45) an die erste Telekommunikationsvorrichtung (4; 44) in Ansprechen auf das Anforderungssignal, und
Verbinden der weiteren Telekommunikationsvorrichtung (5; 45) an die bereits verbundenen Telekommunikationsvorrichtungen,
**dadurch gekennzeichnet, dass** das Bestätigungssignal Identifikationsdaten enthält, welche ermöglichen, dass ein Ruf an die weitere Telekommunikationsvorrichtung über das Telekommunikationsnetzwerk (1; 41) aufgebaut wird, und dass die weitere Telekommunikationsvorrichtung (5; 45) an die bereits verbundenen Telekommunikationsvorrichtungen über das Telekommunikationsnetzwerk (1; 41) unter Verwendung der Identifikationsdaten verbunden wird.

2. Verfahren nach Anspruch 1, **dadurch gekennzeichnet, dass** die weitere Telekommunikationsvorrichtung, welche mit den bereits verbundenen Telekommunikationsvorrichtungen verbunden wird, mit der nicht eingebundenen Telekommunikationsvorrichtung identisch ist.

3. Verfahren nach Anspruch 1 oder 2, **dadurch gekennzeichnet, dass** der Schritt des Verbindens der weiteren Telekommunikationsvorrichtung unter Steuerung der ersten Telekommunikationsvorrichtung durchgeführt wird.

4. Verfahren nach Anspruch 1 oder 2, **dadurch gekennzeichnet, dass** der Schritt des Verbindens der weiteren Telekommunikationsvorrichtung unter Steuerung der weiteren Telekommunikationsvorrichtung durchgeführt wird.

5. Verfahren nach Anspruch 1, **dadurch gekennzeichnet, dass** sich die weitere Telekommunikationsvorrichtung, welche mit den bereits verbundenen Telekommunikationsvorrichtungen verbunden wird, von der nicht eingebundenen Telekommunikationsvorrichtung unterscheidet.

6. Verfahren nach einem der Ansprüche 1 bis 5, **dadurch gekennzeichnet, dass** die Identifikationsdaten eine Telefonnummer der weiteren Telekommunikationsvorrichtung (5, 31, 32; 45) enthalten.

7. Verfahren nach einem der Ansprüche 1 bis 6, **dadurch gekennzeichnet, dass** das Verfahren ferner die Schritte enthält:
Empfangen des Anforderungssignals in einer Mehrzahl an Telekommunikationsvorrichtungen (5, 31, 32), welche nicht im Ruf eingebunden sind,
Übertragen eines Bestätigungssignals von jeder der Mehrzahl an nicht eingebundenen Telekommunikationsvorrichtungen, welches Identifikationsdaten enthält, welche einen Aufbau eines Rufs an eine weitere Telekommunikationsvorrichtung, welche durch die jeweilige der Mehrzahl an nicht eingebundenen Telekommunikationsvorrichtungen spezifiziert wird, ermöglichen,
Empfangen der Mehrzahl an Bestätigungssignale in der ersten Telekommunikationsvorrichtung (4),
Darlegen einer Liste an Identifikationsdaten, welche jeder der Mehrzahl an nicht eingebundenen Telekommunikationsvorrichtungen entsprechen, an einer Datenausgangs-Benutzerschnittstelle (18) der ersten Telekommunikationsvorrichtung (4),
Auswählen einer (5) der Mehrzahl an nicht eingebundenen Telekommunikationsvorrichtungen aus der Liste, und
Verbinden der weiteren Telekommunikationsvorrichtung, welche durch die ausgewählte, nicht eingebundene Telekommunikationsvorrichtung (5) spezifiziert ist, mit den bereits verbundenen Telekommunikationsvorrichtungen über das Telekommunikationsnetzwerk (1) mittels der Identifikationsdaten, welche der ausgewählten, nicht eingebundenen Telekommunikationsvorrichtung entsprechen.

8. Verfahren nach einem der Ansprüche 1 bis 6, **dadurch gekennzeichnet, dass** das Verfahren ferner die Schritte enthält:
Empfangen des Anforderungssignals in einer Mehrzahl an Telekommunikationsvorrichtungen (5, 31, 32), welche nicht im Ruf eingebunden sind,
Darlegen einer Anzeige des empfangenen Anforderungssignals an einer Datenausgangs-Benutzerschnittstelle (29) in jeder der Mehrzahl an nicht eingebundenen Telekommunikationsvorrichtungen,
Empfangen einer Benutzerantwort auf die Anzeige über eine Dateneingangs-Benutzerschnittstelle (30) in einer ausgewählten (5) der Mehrzahl an nicht eingebundenen Telekommunikationsvorrichtungen, und
Übertragen eines Bestätigungssignals von der ausgewählten, nicht eingebundenen Telekommunikationsvorrichtung (5) an die erste Telekommunikationsvorrichtung (4) in Ansprechen auf die Benutzerantwort.

9. Verfahren nach einem der Ansprüche 1 bis 8, **dadurch gekennzeichnet, dass** die Kurzstrecken-Kommunikationsverbindung eine Bluetooth-Verbindung ist.

10. Verfahren nach einem der Ansprüche 1 bis 8, **dadurch gekennzeichnet, dass** die Kurzstrecken-Kommunikationsverbindung eine Infrarot-Kommunikationsverbindung ist.

11. Telekommunikationsvorrichtung (4; 44), welche derart angeordnet ist um über ein Telekommunikationsnetzwerk (1; 41) an weitere Telekommunikationsvorrichtungen verbunden zu werden, und ferner Mittel (13, 14; 36; 47) zum Austauschen von Signalen über eine Kurzstrecken-Kommunikationsverbindung hat, und eine Dateneingangs-Benutzerschnittstelle (11) hat, welche es einem Benutzer erlaubt der Vorrichtung Eingangsdaten zuzuführen, wobei die Vorrichtung ferner dazu angeordnet ist um:
über die Dateneingangs-Benutzerschnittstelle (11) eine Benutzereingabe zu empfangen, welche eine Einbindung einer weiteren Telekommunikationsvorrichtung (5; 45) in einem bereits bestehenden Ruf zwischen der Vorrichtung und mindestens einer der anderen Telekommunikationsvorrichtungen anfordert,
über die Kurzstrecken-Kommunikationsverbindung zu einer anderen der anderen Telekommunikationsvorrichtungen, die nicht in dem Ruf eingebunden ist, eine Anforderung zur Einbindung der weiteren Vorrichtung im bestehenden Ruf zu übertragen,
über die Kurzstrecken-Kommunikationsverbindung von der nicht eingebundenen Telekommunikationsvorrichtung ein Bestätigungssignal zu empfangen, welches Identifikationsdaten enthält, welche einen Aufbau eines Rufes an die weitere Telekommunikationsvorrichtung ermöglichen, und
eine Verbindung an die weitere Vorrichtung bereitzustellen,
**dadurch gekennzeichnet, dass** die Vorrichtung ferner dazu angeordnet ist, um:
die Verbindung an die weitere Vorrichtung über das Telekommunikationsnetzwerk (1; 41) mittels der empfangenen Identifikationsdaten bereitzustellen, und
die bereitgestellte Verbindung und den bestehenden Ruf zu einem gemeinsamen Ruf zu vereinen.

12. Telekommunikationsvorrichtung nach Anspruch 11, **dadurch gekennzeichnet, dass** die Identifikationsdaten eine Telefonnummer der weiteren Telekommunikationsvorrichtung (5, 31, 32; 45) enthalten.

13. Telekommunikationsvorrichtung nach Anspruch 11 oder 12, **dadurch gekennzeichnet, dass** die Vorrichtung ferner dazu angeordnet ist um:
ein Bestätigungssignal von einer Mehrzahl an weiteren Telekommunikationsvorrichtungen (5, 31, 32) zu empfangen,
eine Liste an Identifikationsdaten, welche jeder der Mehrzahl an weiteren Telekommunikationsvorrichtungen entsprechen, an einer Datenausgangs-Benutzerschnittstelle (18) darzulegen,
aus der Liste eine (5) der Mehrzahl an weiteren Telekommunikationsvorrichtungen auszuwählen, und
eine Verbindung an die ausgewählte, weitere Telekommunikationsvorrichtung (5) mittels der Identifikationsdaten bereitzustellen, welche der ausgewählten, weiteren Telekommunikationsvorrichtung entsprechen.

14. Telekommunikationsvorrichtung nach einem der Ansprüche 11 bis 13, **dadurch gekennzeichnet, dass** die Vorrichtung ein Mobiltelefon (4) ist.

15. Telekommunikationsvorrichtung nach einem der Ansprüche 11 bis 14, **dadurch gekennzeichnet , dass** die Kurzstrecken-Kommunikationsverbindung eine Bluetooth-Verbindung ist.

16. Telekommunikationsvorrichtung nach einem der Ansprüche 11 bis 14, **dadurch gekennzeichnet , dass** die Kurzstrecken-Kommunikationsverbindung eine Infrarot-Kommunikationsverbindung ist.

17. Telekommunikationsvorrichtung (5; 31; 32) welche dazu angeordnet ist um über ein Telekommunikationsnetzwerk mit weiteren Telekommunikationsvorrichtungen verbunden zu werden, und ferner Mittel (21, 22) zum Austauschen von Signalen über eine Kurzstrecken-Kommunikationsverbindung hat, wobei die Vorrichtung ferner dazu angeordnet ist um:
ein Signal über die Kurzstrecken-Kommunikationsverbindung von einer ersten der weiteren Telekommunikationsvorrichtungen zu empfangen, welches eine Einbindung der Vorrichtung in einem Ruf anzufordern, welcher bereits zwischen einer Anzahl der weiteren Telekommunikationsvorrichtungen (2, 3, 4; 41, 42, 43) besteht, und
ein Bestätigungssignal an die erste weitere Telekommunikationsvorrichtung über die Kurzstrecken-Kommunikationsverbindung zu übertragen, welches Identifikationsdaten enthält, welche einen Aufbau eines Rufs zur Vorrichtung in Ansprechen auf das Anforderungssignal ermöglichen,
**dadurch gekennzeichnet, dass** die Vorrichtung ferner dazu angeordnet ist um die Identifikationsdaten derart bereitzustellen, dass ein Aufbau des Rufs an die Vorrichtung über das Telekommunikationsnetzwerk ermöglicht wird, und ferner dazu angeordnet ist als Ergebnis des Rufes an die weiteren Telekommunikationsvorrichtungen zu verbinden.

18. Telekommunikationsvorrichtung nach Anspruch 17, **dadurch gekennzeichnet, dass** die Identifikationsdaten eine Telefonnummer der Vorrichtung enthalten.

19. Telekommunikationsvorrichtung nach Anspruch 17 oder 18, **dadurch gekennzeichnet, dass** die Vorrichtung ferner dazu angeordnet ist um:
eine Anzeige des empfangenen Anforderungssignals an einer Datenausgangs-Benutzerschnittstelle (29) darzulegen,
eine Benutzerantwort auf die Anzeige über eine Dateneingangs-Benutzerschnittstelle (30) zu empfangen, und
das Bestätigungssignal in Ansprechen auf die Benutzerantwort zu übertragen.

20. Telekommunikationsvorrichtung nach einem der Ansprüche 17 bis 19, **dadurch gekennzeichnet, dass** die Vorrichtung ein Mobiltelefon (5) ist.

21. Telekommunikationsvorrichtung nach einem der Ansprüche 17 bis 20, **dadurch gekennzeichnet, dass** die Kurzstrecken-Kommunikationsverbindung eine Bluetooth-Verbindung ist.

22. Telekommunikationsvorrichtung nach einem der Ansprüche 17 bis 20, **dadurch gekennzeichnet, dass** die Kurzstrecken-Kommunikationsverbindung eine Infrarot-Kommunikationsverbindung ist.

## Revendications

1. Procédé d'inclusion d'un dispositif de télécommunication supplémentaire (5; 45) dans un appel existant entre un certain nombre de dispositifs de télécommunication (2, 3, 4; 42, 43, 44) déjà connectés les uns aux autres à travers un réseau de télécommunication (1; 41), ce réseau de télécommunication permettant des appels dans lesquels plus de deux dispositifs de télécommunication sont connectés les uns aux autres, le procédé comprenant les étapes consistant à :
• émettre par l'intermédiaire d'une liaison de communication à courte distance, à partir d'un premier (4; 44) des dispositifs de télécommunication déjà connectés, un signal demandant que le dispositif de télécommunication supplémentaire (5; 45) soit inclus dans l'appel existant,
• recevoir le signal de demande, par l'intermédiaire de la liaison de communication à courte distance, dans un dispositif de télécommunication (5, 31, 32; 45) qui n'est pas inclus dans l'appel,
• émettre un signal d'acquittement, par l'intermédiaire de la liaison de communication à courte distance, à partir du dispositif de télécommunication non inclus (5, 31, 32; 45) vers le premier dispositif de télécommunication (4; 44), en réponse au signal de demande, et
• connecter le dispositif de télécommunication supplémentaire (5; 45) aux dispositifs de télécommunication déjà connectés,
**caractérisé en ce que** le signal d'acquittement comprend des données d'identification permettant d'établir un appel vers le dispositif de télécommunication supplémentaire, par l'intermédiaire du réseau de télécommunication (1; 41), et **en ce que** le dispositif de télécommunication supplémentaire (5; 45) est connecté aux dispositifs de télécommunication déjà connectés par l'intermédiaire du réseau de télécommunication (1; 41), en utilisant les données d'identification.

2. Procédé selon la revendication 1, **caractérisé en ce que** le dispositif de télécommunication supplémentaire qu'on connecte aux dispositifs de télécommunication déjà connectés, est identique au dispositif de télécommunication non inclus.

3. Procédé selon la revendication 1 ou 2, **caractérisé en ce que** l'étape de connexion du dispositif de télécommunication supplémentaire est accomplie sous la commande du premier dispositif de télécommunication.

4. Procédé selon la revendication 1 ou 2, **caractérisé en ce que** l'étape de connexion du dispositif de télécommunication supplémentaire est accomplie sous la commande du dispositif de télécommunication supplémentaire.

5. Procédé selon la revendication 1, **caractérisé en ce que** le dispositif de télécommunication supplémentaire qu'on connecte aux dispositifs de télécommunication déjà connectés, est différent du dispositif de télécommunication non inclus.

6. Procédé selon l'une quelconque des revendications 1 à 5, **caractérisé en ce que** les données d'identification comprennent un numéro de téléphone du dispositif de télécommunication supplémentaire (5, 31, 32; 45).

7. Procédé selon l'une quelconque des revendications 1 à 6, **caractérisé en ce que** le procédé comprend en outre les étapes consistant à :
• recevoir le signal de demande dans une multiplicité de dispositifs de télécommunication (5, 31, 32) non inclus dans ledit appel,
• émettre à partir de chacun de la multiplicité de dispositifs de télécommunication non inclus, un signal d'acquittement comprenant des données d'identification permettant d'établir un appel vers un dispositif de télécommunication supplémentaire spécifié par le dispositif respectif de la multiplicité de dispositifs de télécommunication non inclus,
• recevoir la multiplicité de signaux d'acquittement dans le premier dispositif de télécommunication (4),
• présenter sur une interface d'utilisateur de sortie de données (18) du premier dispositif de télécommunication (4), une liste de données d'identification correspondant à chacun de la multiplicité de dispositifs de télécommunication non inclus,
• sélectionner dans ladite liste l'un (5) de la multiplicité de dispositifs de télécommunication non inclus, et
• connecter le dispositif de télécommunication supplémentaire spécifié par le dispositif de télécommunication non inclus qui est sélectionné (5), aux dispositifs de télécommunication déjà connectés, par l'intermédiaire du réseau de télécommunication (1), en utilisant les données d'identification correspondant au dispositif de télécommunication non inclus qui est sélectionné.

8. Procédé selon l'une quelconque des revendications 1 à 6, **caractérisé en ce que** le procédé comprend en outre les étapes consistant à :
• recevoir le signal de demande dans une multiplicité de dispositifs de télécommunication (5, 31, 32) non inclus dans ledit appel,
• présenter une indication du signal de demande reçu, sur une interface d'utilisateur de sortie de données (29), dans chacun de la multiplicité de dispositifs de télécommunication non inclus,
• recevoir une réponse d'utilisateur à ladite indication, par l'intermédiaire d'une interface d'utilisateur d'entrée de données (30) dans l'un sélectionné (5) de la multiplicité de dispositifs de télécommunication non inclus, et
• émettre un signal d'acquittement à partir du dispositif de télécommunication non inclus sélectionné (5), vers le premier dispositif de télécommunication (4), en réponse à ladite réponse d'utilisateur.

9. Procédé selon l'une quelconque des revendications 1 à 8, **caractérisé en ce que** la liaison de communication à courte distance est une liaison Bluetooth.

10. Procédé selon l'une quelconque des revendications 1 à 8, **caractérisé en ce que** la liaison de communication à courte distance est une liaison de communication infrarouge.

11. Dispositif de télécommunication (4, 44) agencé pour être connecté à d'autres dispositifs de télécommunication à travers un réseau de télécommunication (1; 41) et ayant en outre des moyens (13, 14; 36; 47) pour échanger des signaux par l'intermédiaire d'une liaison de communication à courte distance, et ayant une interface d'utilisateur d'entrée de données (11) permettant à un utilisateur de fournir des données d'entrée au dispositif, le dispositif étant en outre agencé pour :
• recevoir par l'intermédiaire de l'interface d'utilisateur d'entrée de données (11) un signal d'entrée d'utilisateur demandant qu'un dispositif de télécommunication supplémentaire (5; 45) soit inclus dans un appel déjà existant entre le dispositif et au moins un desdits autres dispositifs de télécommunication,
• émettre par l'intermédiaire de la liaison de communication à courte distance à un autre desdits autres dispositifs de télécommunication qui n'est pas inclus dans ledit appel une demande pour que le dispositif supplémentaire soit inclus dans l'appel existant,
• recevoir par l'intermédiaire de la liaison de communication à courte distance depuis ledit dispositif de télécommunication non inclus un signal d'acquittement comprenant des données d'identification permettant d'établir un appel vers le dispositif de télécommunication supplémentaire, et
• établir une connexion vers le dispositif supplémentaire,
**caractérisé en ce que** le dispositif est en outre agencé pour
• établir la connexion vers le dispositif supplémentaire par l'intermédiaire du réseau de télécommunication (1; 41) en utilisant les données d'identification reçues, et
• joindre à un appel commun la connexion établie et l'appel existant.

12. Dispositif de télécommunication selon la revendication 11, **caractérisé en ce que** les données d'identification comprennent un numéro de téléphone du dispositif de télécommunication supplémentaire (5, 31, 32; 45).

13. Dispositif de télécommunication selon la revendication 11 ou 12, **caractérisé en ce que** le dispositif est en outre agencé pour :
• recevoir un signal d'acquittement provenant d'une multiplicité de dispositifs de télécommunication supplémentaires (5, 31, 32),
• présenter sur une interface d'utilisateur de sortie de données (18) une liste de données d'identification correspondant à chacun de la multiplicité de dispositifs de télécommunication supplémentaires,
• sélectionner dans la liste un (5) de la multiplicité de dispositifs de télécommunication supplémentaires, et
• établir une connexion vers le dispositif de télécommunication supplémentaire sélectionné (5), par l'utilisation des données d'identification correspondant au dispositif de télécommunication supplémentaire sélectionné.

14. Dispositif de télécommunication selon l'une quelconque des revendications 11 à 13, **caractérisé en ce que** le dispositif est un téléphone mobile (4).

15. Dispositif de télécommunication selon l'une quelconque des revendications 11 à 14, **caractérisé en ce que** la liaison de communication à courte distance est une liaison Bluetooth.

16. Dispositif de télécommunication selon l'une quelconque des revendications 11 à 14, **caractérisé en ce que** la liaison de communication à courte distance est une liaison de communication infrarouge.

17. Dispositif de télécommunication (5; 31; 32) agencé pour être connecté à d'autres dispositifs de télécommunication à travers un réseau de télécommunication et ayant en outre des moyens (21, 22) pour échanger des signaux par l'intermédiaire d'une liaison de communication à courte distance, le dispositif étant en outre agencé pour :
• recevoir par l'intermédiaire de la liaison de communication à courte distance un signal provenant d'un premier desdits autres dispositifs de télécommunication demandant que le dispositif soit inclus dans un appel qui existe déjà entre un certain nombre desdits autres dispositifs de télécommunication (2, 3, 4; 41, 42, 43), et
• émettre vers ledit premier autre dispositif de télécommunication, par l'intermédiaire de la liaison de communication à courte distance, un signal d'acquittement comprenant des données d'identification permettant d'établir un appel dirigé vers le dispositif, en réponse au signal de demande,
**caractérisé en ce que** le dispositif est en outre agencé pour fournir lesdites données d'identification de manière à autoriser l'établissement de l'appel vers le dispositif par l'intermédiaire du réseau de télécommunication, et est en outre agencé pour être connecté auxdits autres dispositifs de télécommunication sous l'effet dudit appel.

18. Dispositif de télécommunication selon la revendication 17, **caractérisé en ce que** les données d'identification comprennent un numéro de téléphone du dispositif.

19. Dispositif de télécommunication selon la revendication 17 ou 18, **caractérisé en ce que** le dispositif est en outre agencé pour :
• présenter une indication du signal de demande reçu, sur une interface d'utilisateur de sortie de données (29),
• recevoir une réponse d'utilisateur à ladite indication, par l'intermédiaire d'une interface d'utilisateur d'entrée de données (30), et
• émettre le signal d'acquittement sous l'effet de ladite réponse d'utilisateur.

20. Dispositif de télécommunication selon l'une quelconque des revendications 17 à 19, **caractérisé en ce que** le dispositif est un téléphone mobile (5).

21. Dispositif de télécommunication selon l'une quelconque des revendications 17 à 20, **caractérisé en ce que** la liaison de communication à courte distance est une liaison Bluetooth.

22. Dispositif de télécommunication selon l'une quelconque des revendications 17 à 20, **caractérisé en ce que** la liaison de communication à courte distance est une liaison de communication infrarouge.
